# EUROPEAN PATENT SPECIFICATION

(11) **EP 2 907 899 B1**
(45) Date of publication and mention of the grant of the patent: **27.07.2016**
(21) Application number: 15165036.3
(22) Date of filing: 24.04.2015
(51) Int. Cl.: C25C 1/00, C25B 1/00, C25B 3/00, C22B 4/00

(54) **Method for recovering metal and nonmetal elements from objects comprising metal and organic compounds**
Verfahren zur Rückgewinnung von metallischen und nichtmetallischen Elementen aus gegenständen aus metallischen und organischen Verbindungen
Procédé pour la récupération de métaux et d'éléments non métalliques et métalliques à partir d'objets contenant des composés organiques

(30) Priority: 30.05.2014 EP 14170661
(43) Date of publication of application: 19.08.2015
(73) Proprietor: Costache, Nicolae, 041329 Bucuresti (RO); Belakovs, Voldemars, 550308 Sibiu (RO); Banu, Geanina Silviana, 100113 Ploiesti, Prahova County (RO); Raducanu, Constantin-Bradut, 020469 Bucuresti (RO)
(72) Inventor: Costache, Nicolae, 041329 Bucuresti (RO); Belakovs, Voldemars, 550308 Sibiu (RO); Banu, Geanina Silviana, 100113 Ploiesti, Prahova County (RO); Raducanu, Constantin-Bradut, 020469 Bucuresti (RO)
(74) Representative: KATZAROV S.A.

(56) References cited:
- WO-A1-01/18152
- WO-A1-95/05431
- WO-A1-2011/150984
- WO-A2-2008/044218
- CA-A1- 2 729 239
- US-A1- 2002 092 377

## Description

The present invention relates to a method for recovering metal and nonmetal elements from man-made objects, or products, and/or from naturally occurring objects that comprise one or more metals and one or more organic compounds, according to the claims.

In the present description, the term "organic compound" includes any natural or man-made gaseous, liquid or solid chemical compound or material, whose molecules contain carbon. This includes for example, but not exclusively, plastics and polymers, for example the polymers used for making electronic printed circuit boards (PCB). Also, the expression "comprising metals and organic compounds" is to be understood here as meaning that the thus qualified objects comprise one or more metals and one or more organic compounds. Therefore, even though the expression used to qualify them in the present description comprises the words metals and organic compounds in plural, the respective objects may comprise only one type of metal and/or only one type of organic compound.

The objects comprising metals and organic compounds referred to in the present description can be naturally occurring objects or artificial, i.e. man-made, objects. Their part of metals and organic compounds together is preferably at least 80 percent of their volume.

The method of the present invention for recovering metal and nonmetal elements from objects comprising metals and organic compounds has applications in a variety of fields, including for example, but not exclusively:
- The recycling and recovery of metal and nonmetal elements from electronic scrap.
- The oil industry - tar sands and oil shale processing for recovering hydrocarbons, base metals, rare earths and noble metals.
- The car industry - car catalyst scrap recycling for recovering valuable metals.
- The recovery of metals from ore concentrate, which is the semi-final product of ore processing.
- The separation of valuable metals from various alloys.
- The recycling of food and/or beverage packages for the recovery of valuable components.

The present invention for recovering metal and non-metal elements from man-made objects, or products, comprising metals and organic compounds and/or from naturally occurring objects comprising metals and organic compounds is described in the present specification in relation with the recycling and recovery of metal and nonmetal elements from electronic scrap. The recycling and recovery of metal and nonmetal elements from electronic scrap is one application of the present invention. As mentioned above, other applications of the method of the invention are however possible, for which only slight adaptations of the herein described embodiments may be required, the essential steps of the method remaining the same.

Thus the present invention for recovering metal and non-metal elements from objects comprising one or more metals and one or more organic compounds relates in some embodiments to a recycling method for recovering metal and nonmetal elements from electronic scrap. In particular, the present invention according to these embodiments relates to a recycling method for recovering metal and nonmetal elements from electronic scrap by, in a first phase, disintegration of the substrate, which is made for example of plastics, polymers or any other organic compounds, in an environmentally safe way using microwave radiation and Faraday cage effect in order to create a low pressure plasma around the processed objects and simultaneously adding specific catalysts, in particular reactive metal salts solution in water with heavy and semi-heavy water, and by, in a second phase, separating metals using particular physics fundamentals of atoms while applying accordingly high frequency and adhesive and cohesive forces, more specifically under the combined actions of microwave radiation, auger electron radiation, electrolysis, gravity and/or adhesive and cohesive forces.

There are several prior art methods for the recycling and recovery of metal and nonmetal elements from electronic scrap, all having different drawbacks in terms of costs, time and energy consumption, efficiency and output results. These methods for recycling and recovery of metal and nonmetal elements from electronic scrap include for example:
- Burning the plastic and less valuable metals away from the electronic scrap on an open fire source. This process releases carcinogenic and neurotoxins into the air, thus contributing to an acrid, lingering smoke. These fumes include dioxins and furans. Bonfire waste is usually disposed into waterways. After burning, manual sorting is necessary, followed by smelting and acid biting. All of these steps are not environmentally safe and they are expensive.
- Mechanical shredding and separation. This process has a low recycling efficiency. After shredding, the process also requires smelting and acid biting. This is expensive and environmentally unsafe.
- Cryogenic decomposition of electronic scrap. After processing the electronic scrap with liquid nitrogen, it is necessary to use shredding, smelting and acid biting in order to recover metals. This is thus an overall expensive and environmentally unsafe process.

These prior art methods for the recycling and recovery of metal and nonmetal elements from electronic scrap all imply a long and expensive process, having multiple laborious steps in order to achieve a good recovery rate. Furthermore, they present serious challenges regarding the environment, being overall environmentally not safe.

Other known recycling/recovering methods are described for example in the following publications:
- WO2008/044218 which relates to a method for treating bulk particulate material with microwaves;
- WO2011/150984 which relates to a method for recovering noble metals and other by-product from ore;
- CA2729239 which relates to a method for electro-extraction of desirable metals from hydroxyl acids by microwaves and electrolysis;
- WO01/18152 which relates to a method for degrading plastic material waste by pyrolysis for transformation into hydrocarbon mixture to be used as fuel;
- WO95/05431 which relates to a method for recycling waste containing plastic and/or organic material; and
- US2002/0092377 which relates to a method for recovering precious metals from refractory materials using thiosulfate lixiviants.

There is thus a need for an environmentally safe, industrially applicable, and economical method having high output efficiency for the recycling and recovery of metal and nonmetal elements from electronic scrap and/or from other objects comprising metals and organic compounds in a total proportion of at least 80 percent.

An aim of the present invention is thus to provide an environmentally safe and industrially applicable method having a high production rate and output results quality for the recycling and recovery of metal and nonmetal elements from electronic scrap and/or from other objects comprising metals and organic compounds in a total proportion of at least 80 percent.

Another aim of the present invention is to propose an economical method having a high efficiency in terms of time and energy consumption for the recycling and recovery of metal and nonmetal elements from electronic scrap and/or from other objects comprising metals and organic compounds in a total proportion of at least 80 percent.

Still another aim of the present invention is to provide an environmentally safe and industrially applicable method for recycling and recovery of metal and nonmetal elements from electronic scrap and/or from other objects comprising metals and organic compounds in a total proportion of at least 80 percent, which does not require complex and multiple energy and time consuming devices in order to achieve high output results, but a single multi action efficient device.

The above aims and other advantages are achieved by a method for the recycling and recovery of metal and nonmetal elements from objects comprising metals and organic compounds, comprising the features of the corresponding independent claims.

The above aims are achieved in particular by a method for the recycling and recovery of metal and nonmetal elements from objects comprising metals and organic compounds, the method comprising a first phase of making the compounds of said objects electrically conductive in their entire volume without any metal losses, the first phase comprising the steps of placing the objects in the enclosure of a reactor, wherein the enclosure forms a Faraday cage; introducing steam comprising reactive metal salts and heavy and/or semi heavy water within the enclosure; applying micro-wave radiations within the enclosure in order to create low pressure plasma around the objects for disintegrating the organic compounds of said objects; and a second phase of separating metal and nonmetal elements, the second phase comprising the steps of placing compounds of said objects processed in the first phase in an enclosure of a reactor, or leaving them in the previously used enclosure if both phases are performed in the same reactor; introducing an electrolyte bath into the enclosure; applying electrical voltage between an anode and a cathode located within the enclosure and applying micro-wave radiations within the enclosure.

The method of the invention thus comprises a first phase of disintegration of the organic compounds, for example the substrate made of plastics, in an environmentally safe way, using microwave radiation and Faraday cage effect in order to create low pressure plasma around the input raw material, and by simultaneously adding specific catalysts into the low pressure plasma/to the input raw material (i.e. reactive metal salts solution in water with presence of heavy and semi-heavy water) and a second phase of separation of metals using specific physics fundamentals of atoms while applying accordingly high frequency and adhesive and cohesive forces, more specifically, under the action of microwave radiation, auger electron radiation, electrolysis, gravity and/or adhesive and cohesive forces.

In embodiments, both phases of the method of the present invention are performed in a same reactor.

The above aims are also achieved in particular by an exemplary reactor comprising a low pressure thermo resistant enclosure having a correspondingly configured door sealing system. Said enclosure may have various shapes (e.g. square, round, etc.), depending for example of particular space requirements and/or of the volume of the objects to be processed in a batch.

Preferably, the enclosure is made of stainless steel and forms a Faraday cage. Preferably, it comprises ceramics proppant for inside wall isolation.

A reactor comprising such enclosure further comprises microwave sources coupled with, for example attached to, the walls of the enclosure, wherein the beams of the sources are preferably orientated on a horizontal axis. The microwave sources are furthermore preferably arranged in a same horizontal plane.

Preferably, the microwave sources have an optimal radiation of 2.45 GHz. Other frequencies are however possible within the frame of the invention.

The reactor comprising such enclosure further comprises one or more inlets for introducing catalysts (i.e. reactive metal salts solution in water with presence of heavy and semi heavy water) and/or electrolyte (i.e. fast ion conductor) inside the enclosure. One inlet can be dedicated for each additive, i.e. one inlet for introducing the catalysts and one inlet for introducing the electrolyte) or one single inlet can alternatingly supply the catalysts and the electrolyte inside the enclosure.

The reactor comprising such enclosure further comprises one or more outlets for collecting gas out of the enclosure, and for example transporting it into a gas reservoir and/or for collecting hydrocarbon out of the enclosure and for example transporting it into a hydrocarbon reservoir. The gas outlet is preferably positioned on top of the enclosure while the hydrocarbon outlet is preferably positioned at the bottom of the enclosure.

The reactor further comprises a trolley for transporting the raw material or objects, also known as the input raw material, inside the enclosure and/or for transporting the resulting material or remains of the treated objects, also known as the output, outside the enclosure.

The trolley is for example made of green silicon carbide.

The body of the trolley further acts as an anode. A part of this anode is for example made of graphite coated steel having various metal strips or rods attached to it. Such various metal strips or rods are for example used for the separation of noble metals and rare earths and are preferably coated with a layer of the same metal as the metal that is to be isolated, or extracted, from the input raw material.

The reactor further comprises a cathode inside the enclosure, such cathode being preferably graphite coated.

The anode and the cathode inside the reactor are working along a vertical axis, i.e. they are located inside the reactor on a same vertical axis, while the microwave radiation is preferably acting along a horizontal axis.

The reactor further comprises outside reservoirs, for example two supply reservoirs: one supply reservoir for the catalysts and one supply reservoir for the electrolyte; and/or two evacuation reservoirs: one evacuation reservoir for gas and one evacuation reservoir for hydrocarbon.

The reactor further comprises a temperature and/or pressure control system for controlling the temperature and/or the pressure inside the enclosure.

The method of the present invention for the recycling and recovery of metal and nonmetal elements from electronic scrap and/or from any other objects comprising metals and organic compounds is economical and applicable at an industrial scale. Experiments have shown that, according to embodiments of the present invention, the separation of metals has a 99% purity rate, in a shorter processing time and at lower costs than existing technologies. Still according to embodiments of the present invention, the processing time is approximately 30% less than with prior art technologies while the costs are approximately 50% less than with prior art technologies.

The method of the present invention for the recycling and recovery of metal and nonmetal elements from objects comprising metals and organic compounds comprises the following steps:
1. Loading objects comprising metals and organic compounds, for example unshredded electronic scraps that were not submitted to any preparation phase, into the trolley and transferring the trolley inside the reactor.
2. In a first phase, the organic compounds, for example the plastics or polymers forming the substrate of the electronic scraps, are disintegrated in an environmentally safe way, using microwave radiation and Faraday cage effect in order to create low pressure plasma around the input raw material, or objects, and by adding specific catalysts, i.e. reactive metal salts solutions in water with presence of heavy and semi heavy water, into the plasma through an inlet of the enclosure. As a result of this first phase of the method, the organic compounds become electrically conductive as they are essentially turned into carbon black, and possibly hydrocarbons, wherein the hydrocarbons are preferably evacuated from the reactor. No metal is lost during the first phase.
3. Collecting gases and/or hydrocarbons from inside the reactor through outlets of the enclosure, and transporting them to the outside evacuation reservoirs, for storage and possibly reuse.
4. In a second phase, the metals are separated by adding electrolyte (i.e. fast ion conductor) into the reactor through an inlet of the enclosure and by applying electrical power to the anode and the cathode located inside the reactor.
5. Applying microwave frequency radiations to the enclosure. During this second phase, the metals are separated under the effects of specific physics fundamentals of atoms and adhesive and cohesive forces, more specifically, under the action of the microwave radiation, auger electron radiation, electrolysis, gravity, adhesive and cohesive forces.
6. Collecting the separated metals and carbon black after transferring the trolley outside the reactor.

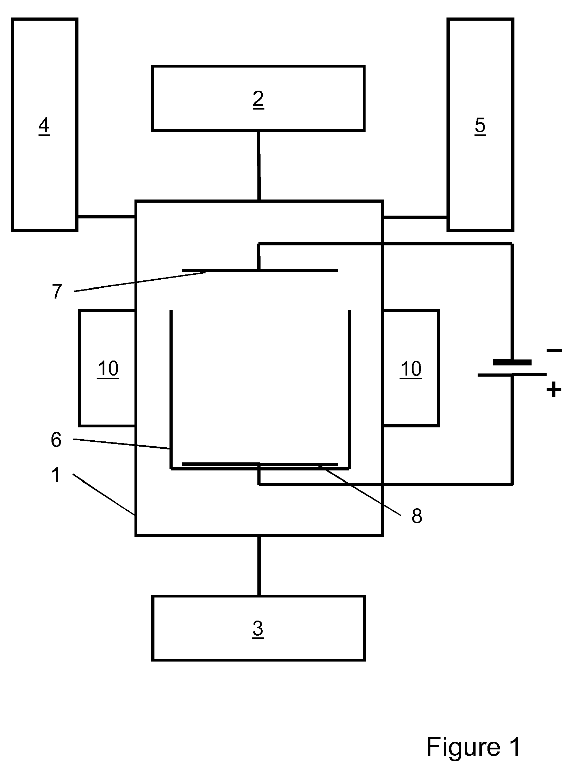

The method of the present invention for the recycling and recovery of metal and nonmetal elements from objects comprising metals and organic compounds, for example electronic scrap, will be better understood by reading the following description of an embodiment, illustrated by the sole figure 1 that schematically represents a reactor according to an embodiment of the invention.

With reference to figure 1, the reactor configured for performing both phases of the method of the invention.

The reactor comprises an enclosure 1 for containing the objects to be processed. The enclosure 1 is a low pressure thermo resistant enclosure 1. The enclosure 1 for example comprises a door, which is not represented in the figure, for allowing the introduction of the objects to be processed and taking the result materials out of the enclosure once the objects have been processed according to the method of the invention. The door preferably comprises a sealing system for avoiding leaking for example of reactants out of the enclosure while the objects are being processed.

The shape and size of the enclosure 1 may be freely chosen, for example depending on particular space constraints and/or on the volume of objects to be processed in a batch.

The enclosure is made of stainless steel and forms a Faraday cage. It may furthermore comprise ceramics proppant for inside wall isolation.

The reactor further comprises microwave sources 10 coupled with, for example attached to, the walls of the enclosure 1. The beams of the microwave sources 10 are preferably orientated on a horizontal axis, such that the microwave radiation is acting along a horizontal axis within the enclosure 1 when the microwave sources 10 are activated. The microwave sources 10 are furthermore preferably arranged in a same horizontal plane.

The microwave sources have a radiation of 2.45 GHz. Other frequencies are however possible within the frame of the invention.

In embodiments, the reactor further comprises one or more inlets that are not represented in the figure, for introducing catalysts, i.e. reactive metal salts solution in water with presence of heavy and semi heavy water, and/or electrolyte, i.e. fast ion conductor, inside the enclosure 1. One inlet can be dedicated for each substance, i.e. one inlet for introducing the catalysts and one inlet for introducing the electrolyte, or a same inlet can alternatingly supply the catalysts and the electrolyte inside the enclosure 1.

The reactor further comprises one or more outlets that are not represented in the figure, for collecting gas out of the enclosure, and for example transporting it into a gas reservoir 2 and/or for collecting hydrocarbon out of the enclosure and for example transporting it into a hydrocarbon reservoir 3. The gas outlet is preferably positioned on top of the enclosure while the hydrocarbon outlet is preferably positioned at the bottom of the enclosure.

The reactor comprises a trolley 6 for transporting the raw material or objects to be processed, also known as the input raw material, inside the enclosure 1 and/or for transporting the resulting material or remains of the processed objects, also known as the output, outside the enclosure 1. The trolley 6 is for example made of green silicon carbide.

The reactor further comprises a cathode 7 and an anode 8 located in the enclosure 1.

The cathode 7 is preferably made of a conductive material, for example steel, coated with graphite.

The anode 8 is for example at least partly made of graphite coated steel, with several strips or rods made of one or more metals. The strips or rods are for example attached to the anode 8 or made integral with it. The metal strips or rods are for example used for the collecting noble metals and rare earths during the second phase of the method of the invention and are preferably coated with a layer of the same metal as the metal that is to be separated from the input raw material, or processed objects.

The anode 8 is attached to the trolley 6, and/or at least a part of the trolley 6 acts as the anode 8.

The anode 8 and the cathode 7 are working along a vertical axis inside the enclosure 1, i.e. they are located inside the enclosure 1 along a same vertical axis. The anode 8 is for example located in a lower portion of the enclosure 1, while the cathode 7 is located above the anode 8, in an upper portion of the enclosure 1. The cathode 7 is preferably located above the objects or compounds to be processed, while the anode 8 is preferably placed under said objects or compounds. When voltage is applied between the anode 8 and the cathode 7, the resulting electric field is thus oriented essentially vertically, and across the objects or compounds to be processed.

The reactor further comprises reservoirs 2, 3, 4, 5 that are located outside the enclosure 1. The reservoirs 2, 3, 4, 5 for example include two supply reservoirs 4, 5: one supply reservoir 4 for the catalysts and one supply reservoir 5 for the electrolyte; and/or two evacuation reservoirs 2, 3: one evacuation reservoir 2 for gas and one evacuation reservoir 3 for hydrocarbon.

The reactor further comprises a control unit 9 for controlling the various elements of the reactor. The control unit 9 for example includes a temperature and/or pressure control system for controlling the temperature and/or the pressure inside the enclosure 1.

The reactor is configured for performing only the first or the second phase of the method of the invention. The reactor then for example comprises the microwave sources 10, but not the anode 8 and cathode 7, or opposite.

Electronic scrap consists from discarded electrical and electronic devices. Electronic scrap contains hazardous but also valuable and scarce materials. Up to 60 elements can be found in complex electronics. Main part of the electronic scrap consists from electronic circuits (Printed Circuit Boards - PCBs), different metals, ceramics, silica, metal oxides, etc.

Electronic scrap is partly dielectric and partly electrically and thermically conductive. Most of the electronic scrap is represented by PCBs, which consist of three parts: a non-conducting substrate, e.g. plastics or polymers, lack; silica fabric, etc., or laminate, conductive circuits printed on or inside the substrate, and the electronic components mounted thereon.

There are three main structures of PCBs: single sided; double sided or multi-layered (coated).

From the perspective of the method of the present invention, all electronic scraps represent composite elements comprising two or more substances that are mixed together, homogenously or in layers, but that are not chemically joined.

The method of the present invention can extract and separate metals at a very low cost from various electronic scraps with significantly greater yields and lower costs than prior art methods. The method of the present invention is using microwave range energy. The method of the present invention is furthermore applying electromagnetic wave energy, corpuscular radiation, to reactants, for example electronic scrap and/or other objects comprising metals and organic compounds, with the purpose of initiating and performing physical and chemical reactions inside the reactor. The method of the invention does not require the preliminary shredding of the electronic scrap.

The method of the present invention for separating and recovering metal and nonmetal elements from electronic scrap and/or other objects comprising metals and organic compounds will be better understood by reading the following description of its two phases according to an embodiment of the invention:
1. Disintegration of the organic compounds, for example the substrate, for example essentially made of plastics, in an environmentally safe way. Microwave radiation and Faraday cage effect are used in order to create low pressure plasma around the input raw material. While low pressure plasma is maintained around the input raw material, specific catalysts, i.e. reactive metal salts solution in water with presence of heavy and semi-heavy water, are added.

In this first phase, the electronic scrap substrate is disintegrated into simpler compounds such as for example carbon black, hydrocarbons, gases, etc., while leaving the metal components unchanged.

In this first phase, the metal components act as "catalysts" for producing the low pressure plasma around the input raw material or objects.

The metallic parts of the PCBs are disposed randomly and act as Faraday cages.

Metal surface electrons are made to vibrate under the action of the microwaves. This acceleration of the electrons produces electromagnetic radiation and high potential, voltage, resulting in the formation of a low pressure plasma around the input raw material or objects.

While the plasma is formed, catalysts, i.e. reactive metal salts solution in water with presence of heavy and semi-heavy water, preferably mixed with steam, for example with high pressure and/or overheated steam, are added to the process.

The objects' dielectric parts are disintegrated into simple components. Electrons are pushed to the plasma's surface, thereby preventing any volatile metal or their oxide to escape from it.

Gases and hydrocarbons produced by the disintegration of the organic compounds, or dielectric parts, are collected from inside the enclosure 1, through outlets, into the outside evacuation reservoirs 2, 3, for storage and possibly reuse.

Before this first phase, the input objects were only partly conductive. The remains of the objects after the first phase are mostly electrically conductive, without any metal being lost.

After completion of the first phase the processed objects comprise metals, carbon black and some quantities of for example ceramics, preferably in a proportion equal or less than 20 %.
2. Separation of metals. High frequency, microwave frequencies, and/or adhesive and cohesive forces are applied to the processed objects. More specifically, microwave radiation, auger electron radiation, electrolysis, gravity and/or adhesive and cohesive forces are applied to the processed objects.

The second phase of the method of the present invention for the recycling and recovery of metal and nonmetal elements from electronic scrap and/or from other objects comprising metals and organic compounds relies on fundamentals of metal and non - metal elements and their atoms, as follows:

All atoms of elements can be divided into four classes:
□ Hypo-electronic (electron - deficient) atoms: Li; Be; B; Na; Mg; Al; K; Ca; Sc; Ti; V; Rb; Sr; Y; Zr; Nb; Cs; Ba; La; Ce; Lu; Hf; Ta.
□ Hyper-electronic (electron - excess) atoms: N; O; F; P; S; Cl; Cu; Zn; Ga; Ge; As; Se; Br; Ag; Cd; In; Sn; Sb; Te; I; Au; Mg; Tl; Pb; Bi; Po; At.
□ Buffer atoms: Cr; Mn; Fe; Co; Ni; Mo; Tc; Ru; Rh; Pd; W; Re; Os; Ir; Pt.
□ Atoms with stable valance: C; Si.

Hypo-electronic atoms are atoms that can increase their valence by adding electrons. Atoms of these elements have more bond orbitals than valence electrons (in the uncharged state) and they can accordingly increase their valence by one unit by accepting an electron.

Hyper-electronic atoms are atoms that can increase their valence by giving up an electron. Atoms of these elements have more valence electrons than bond orbitals and they can increase their valence by one unit by giving up one electron of a pair occupying a bond orbital, thus leaving a valence electron in the orbital.

Buffer atoms are atoms that can give up or accept an electron without change in valence.

All of the above represent fundamentals of intermetallic compounds which the method of the present invention is using. Intermetallic compounds are materials composed of two or more types of metal atoms which exist as homogeneous substances, or covered each other in layers (coats) with phase boundaries.

The method of the present invention furthermore uses fundamentals of cohesive and adhesive forces and of electronegativity of elements, as follows:

Cohesive forces are the intermolecular forces. These attractive forces exist between molecules of the same substance.

Adhesive forces are the attractive forces between unlike molecules. They are caused by forces acting between two substances, such as mechanical forces, for example the two substances sticking to each other, and electrostatic forces, i.e. attraction due to opposed electric charges.

The method of the present invention uses all the above fundamentals of atom physics for the process of metal separation applying physics laws.

For instance, different metals have different adhesive contact quality. When mixed, metals with weaker cohesive force will be separated first from the mixture. Thus, in the second phase of the method, the different metals, under the combined effect of the microwave radiations and the electrical field, will be extracted one after the other from the compounds of the objects to be processed, depending on their respective cohesive force. Under the effect of the electrical field, the metal atoms migrate to the anode 8 and preferably deposit on the rod or strip made of the same metal.

Electronegativity of elements also influences adhesive forces.

According to the method of the present invention, adhesive and cohesive forces allow the deposition of a metal to be separated from the processed objects on buffer or stable valence materials or on other elements from different classes.

Each pair of metal to be separated and material on which the metal is to be deposited requires specific potential, i.e. voltage, calculation.

The method of the present invention for recycling and recovery of metal and nonmetal elements from, for example, electronic scrap will be better understood by reading the following cohesive energy calculation example:

Cohesive energy of solid is defined as the energy required for separating solid material into isolated free atoms.

Cohesive energies range from about 0.1 eV/atom for inert gasses up to about 9eV/atom for strongly bound materials such as tungsten, diamond, etc.

The calculation of cohesive energy E requires:
1. the value of total energy for the solid (bulk) E2
2. the value of energy of the free atom E1

The cohesive energy is calculated as E = E1 - E2.

The calculation of the values of E1 and E2 can be done manually or using a specific simulation software.

### Example for C (carbon):

E1 for C atom: -1.315eV/atom
E2 for C bulk: -8.685eV/atom
Cohesive energy for C: E = E1 - E2 = -1.315 +8.685 = 7.37eV/atom

Below are some examples of element cohesive energies E in eV/atom:
Fe: 4.28; Co: 4.39; Ni: 4.44; Cu: 3.49; Sn: 3.12; Al: 3.39; Pb: 2.03; Ta: 8.1; W: 8.9; Ge: 3.85; Pt: 5.84; Pd: 3.89; Ir: 6.94; Rh: 5.75; Ru: 6.74; Os: 8.17; Au: 3.78; Ag: 2.95

All metals or their alloys (homogeneous or coated, layered, ones) have a type of bonding called metallic bonding which is different from covalent and ionic bonding. In metallic bonding, the outer shells of adjacent atoms overlap and the outer shell electrons are free to move about through the lattice. Solid metals consist of metal cations (+) and a balancing number of these "free" electrons (sea of electrons).

Heat passes along the metal due to lattice cations vibrations and the movement of electrons. In a metallic crystal, each cation is bonded, indirectly, to all the others.

In melting stage of metals, the cations slip over each other. The bonds in liquid metals are weaker than in solid metals. In metals at the boiling point and above, bonds are breaking.

In the second phase of the method of the present invention, specifically the separation of metals, microwave radiation causes electric currents to flow through metals. Big pieces of metals can withstand such currents while small pieces quickly get overheated.

According to the present invention, in this second phase, metals are subjected to physical and chemical reactions. At the same time, microwave radiation, auger electron radiation, electrolysis, gravity, adhesive and cohesive forces are in action.

Under these extreme conditions, metals become very pure and their surface very clean. Adhesion conditions are very good at this stage, thus inducing the deposition of base metals on cathodes and the deposition of rare earths and noble metals on the strips or rods attached to the anode.

In the second phase of the method of the present invention, the material is subjected to microwave radiation, to electrolyte action, i.e. fast ion conductors, like copper iodine - Cul, and also to the action of catalysts such as for example iron isotopes, like Fe55 and others.

Under electrolytic conditions, electrochemical reactions are taking place, thereby inducing the base metals, such as for example cupper, which is the base metal mostly found in electronic scrap, to settle, or deposit, on the cathode.

Furthermore, under the action of microwave irradiation and auger electron irradiation, atoms of rare earths and noble metals are getting negatively charge and start to move towards the metal strips or rods attached to the anode, which has a positive charge.

During this electrolytic process and under the above described actions, metal surfaces become very clean in all the processed material or objects. Under such conditions, when atoms of rare earths and noble metals approach the metal strips or rods attached to the anode that are made of, or covered with, the same material as the material to be separated and collected , rare earths and noble metals atoms settle, or deposit, on their corresponding metals strips or rods under the action of adhesive forces.

In embodiments, the method of the present invention for the recycling and recovery of metal and nonmetal elements from, for example, electronic scrap or other objects does not require complex and multiple energy consuming devices in order to achieve high efficiency output results. The method of the invention is thus economical and applicable at an industrial scale with costs reduced by approximately 50% over prior art technologies.

According to embodiments of the present invention, the separation of metals allows achieving a 99% purity rate of the deposited materials, in a shorter processing time when compared to prior art technologies. More specifically, according to the embodiments of the present invention, the processing time is approximately 30% less than with prior art technologies.

According to embodiments, the method of the present invention is an environmentally safe processing for the recycling and recovery of metal and nonmetal elements from electronic scrap and/or from other objects comprising metals and organic compounds.

In the embodiments described above, the first and second phases of the present method are both performed in a single reactor.

In other embodiments, the first phase and the second phase of the method are performed each in a different reactor, the objects being transferred from one reactor to the other between the phases.

## Claims

1. Method for recovering metal and nonmetal elements from electronic scrap comprising one or more metal and one or more organic compounds, said method comprising:
- a first phase of making the compounds of said electronic scrap electrically conductive in their entire volume without any metal losses, said first phase comprising the steps of:
- placing said electronic scrap in an enclosure (1) of a reactor, wherein said enclosure (1) forms a Faraday cage;
- introducing steam comprising reactive metal salts and heavy and/or semi heavy water within said enclosure (1);
- applying micro-wave radiations within said enclosure (1) in order to create low pressure plasma around said electronic scrap for disintegrating the organic compounds of said electronic scrap;
- a second phase of separating metal and nonmetal elements from the compounds of said electronic scrap, said second phase comprising the steps of:
- placing compounds of said electronic scrap processed in the first phase in an enclosure (1) of a reactor,
- introducing an electrolyte bath into said enclosure (1);
- applying electrical voltage to an anode (8) and a cathode (7) located within said enclosure (1) and applying micro-wave radiations within said enclosure (1).

2. Method according to the preceding claim, said first phase further comprising the step of collecting gases and hydrocarbons from inside said enclosure (1) through outlets of said enclosure (1).

3. Method according to any one of the preceding claims, wherein said electronic scrap is unshredded electronic scrap.

4. Method according to any one of the preceding claims, wherein said first phase and said second phase are performed in the same enclosure (1).

5. Method according to any one of the preceding claims, wherein said micro-wave radiations are applied along a horizontal axis, and wherein said anode (8) and said cathode (7) are located along a same vertical axis within said enclosure (1).

## Patentansprüche

1. Verfahren zur Rückgewinnung von metallischen und nichtmetallischen Elementen aus Elektronikschrott mit einem oder mehreren Metallen und einem oder mehreren organischen Verbindungen, wobei das besagte Verfahren umfasst:
- eine erste Phase, wo die Bauteile des besagten Elektronikschrotts in ihrer Gesamtmenge ohne Metallverlust elektrisch leitfähig gemacht werden, wobei die besagte erste Phase die folgenden Schritte umfasst:
- Platzieren des besagten Elektronikschrotts in einen umschlossenen Raum (1) eines Reaktors, worin der besagte umschlossene Raum (1) einen Faradaykäfig bildet;
- Einlassen von Dampf mit reaktiven Metallsalzen und schwerem und/oder halbschwerem Wasser in den besagten umschlossenen Raum (1);
- Mikrowellenbestrahlen innerhalb des besagten umschlossenen Raums (1), um Niederdruckplasma um den besagten Elektronikschrott herum zu erzeugen, um die organischen Verbindungen des besagten Elektronikschrotts zu zersetzen;
- eine zweite Phase, wo die metallischen und nichtmetallischen Elemente aus den Verbindungen des besagten Elektronikschrotts getrennt werden, wobei die besagte zweite Phase die folgenden Schritte umfasst:
- Platzieren der in der ersten Phase verarbeiteten Bauteile des besagten Elektronikschrotts in einen umschlossenen Raum (1) eines Reaktors;
- Einführung eines Elektrolytbads in den besagten umschlossenen Raum (1);
- Anlegung einer elektrischen Spannung auf eine innerhalb des besagten umschlossenen Raums (1) angeordnete Anode (8) und Kathode (7) und Mikrowellenbestrahlen innerhalb des besagten umschlossenen Raums (1).

2. Verfahren gemäss dem vorhergehenden Anspruch, wobei die besagte erste Phase den Schritt umfasst, die Gase und Kohlenwasserstoffe von innerhalb des besagten umschlossenen Raums (1) durch Ausgänge des besagten umschlossenen Raums (1) zu sammeln.

3. Verfahren gemäss irgendeinem der vorhergehenden Ansprüche, worin der besagte Elektronikschrott ungeschredderter Elektronikschrott ist.

4. Verfahren gemäss irgendeinem der vorhergehenden Ansprüche, worin die besagte erste Phase und die besagte zweite Phase im gleichen umschlossenen Raum (1) durchgeführt werden.

5. Verfahren gemäss irgendeinem der vorhergehenden Ansprüche, worin die besagten Mikrowellenstrahlungen entlang einer horizontalen Achse angelegt werden, und worin die besagte Anode (8) und die besagte Kathode (7) entlang einer gleichen vertikalen Achse innerhalb des besagten umschlossenen Raums (1) angeordnet sind.

## Revendications

1. Procédé pour la récupération d'éléments métalliques et non métalliques à partir de déchets électroniques comprenant un ou plusieurs métaux et un ou plusieurs composés organiques, le dit procédé comprenant:
- une première phase de rendre les composants desdits déchets électroniques électriquement conducteurs dans leur volume intégral sans aucune perte de métal, ladite première phase comprenant les étapes de:
- placer lesdits déchets électroniques dans une enceinte (1) d'un réacteur, ladite enceinte (1) formant une cage de Faraday;
- introduire de la vapeur comprenant des sels métalliques réactifs et de l'eau lourde et/ou semi-lourde au sein de ladite enceinte (1);
- appliquer des radiations microondes au sein de ladite enceinte (1) afin de créer un plasma basse pression autour desdits déchets électroniques pour désintégrer les composés organiques desdits déchets électroniques;
- une deuxième phase de séparer les éléments métalliques et non métalliques des composés desdits déchets électroniques, ladite deuxième phase comprenant les étapes de:
- placer les composants desdits déchets électroniques traités au cours de la première phase dans une enceinte (1) d'un réacteur;
- introduire un bain électrolytique dans ladite enceinte (1);
- appliquer une tension électrique à une anode (8) et une cathode (7) situées au sein de ladite enceinte (1) et appliquer des radiations microondes au sein de ladite enceinte (1).

2. Procédé selon la revendication précédente, ladite première phase comprenant en outre l'étape de récupérer des gaz et des hydrocarbures de l'intérieur de ladite enceinte (1) au travers d'orifices d'évacuation de ladite enceinte (1).

3. Procédé selon l'une quelconque des revendications précédentes, lesdits déchets électroniques étant des déchets électroniques non déchiquetés.

4. Procédé selon l'une quelconque des revendications précédentes, ladite première phase et ladite deuxième phase étant effectuées au sein de la même enceinte (1).

5. Procédé selon l'une quelconque des revendications précédentes, lesdites radiations microondes étant appliquées le long d'un axe horizontal et ladite anode (8) et ladite cathode (7) étant situées le long du même axe vertical au sein de ladite enceinte (1).
